# FASCICULE DE BREVET EUROPEEN

(11) **EP 4 158 853 B1**
(45) Date de publication et mention de la délivrance du brevet: **25.12.2024**
(21) Numéro de dépôt: 21734885.3
(22) Date de dépôt: 19.05.2021
(51) Int. Cl.: H04L 51/212, H04L 51/42

(54) **PROCÉDÉ DE GESTION DE LA TRANSMISSION D'UN MESSAGE DEPUIS UN PREMIER DISPOSITIF À DESTINATION D'UN DEUXIÈME DISPOSITIF, PROCÉDÉ DE GESTION DE LA RÉCEPTION D'UN TEL MESSAGE**
VERFAHREN ZUR VERWALTUNG DER ÜBERTRAGUNG EINER NACHRICHT VON EINER ERSTEN VORRICHTUNG ZU EINER ZWEITEN VORRICHTUNG UND VERFAHREN ZUR VERWALTUNG DES EMPFANGS EINER SOLCHEN NACHRICHT
METHOD FOR MANAGING THE TRANSMISSION OF A MESSAGE FROM A FIRST DEVICE TO A SECOND DEVICE, AND METHOD FOR MANAGING THE RECEIPT OF SUCH A MESSAGE

(30) Priorité: 25.05.2020 FR 2005485
(43) Date de publication de la demande: 05.04.2023
(73) Titulaire: Orange, 92130 Issy-les-Moulineaux (FR)
(72) Inventeur: COUPE, Patrice, 92326 Châtillon (FR)
(86) Numéro de dépôt international: PCT/FR2021/050881
(87) Numéro de publication internationale: WO 2021/240093

(56) Documents cités:
- US-A1- 2002 120 600
- US-A1- 2018 006 983

## Description

### Domaine technique

L'invention se rapporte au domaine des télécommunications.

L'invention se rapporte plus particulièrement à un procédé de gestion de la transmission d'un message depuis un premier dispositif à destination d'un deuxième dispositif, procédé de gestion de la réception d'un tel message.

Les dispositifs sont des dispositifs de traitement de données tels qu'un ordinateur, smartphone, tablettes, etc.

### Etat de la technique

Les environnements de messagerie, les applications et les services (messagerie instantanée, email, SMS, services de publication sociale...), les technologies et services de recherche font désormais partie du quotidien. En raison de leur utilisation intensive, les systèmes de messagerie existants provoquent une surcharge de messages et donc d'informations à lire sur un écran.

L'invention vient améliorer la situation actuelle telle que divulguée, par exemple, dans les documents de l'art antérieur US 2018/006983 et US 2002/120600.

### L'invention

A cet effet, selon un aspect fonctionnel, l'invention a trait à un procédé de gestion de la réception d'un message issu d'un dispositif émetteur au travers d'un réseau de communication tel que défini dans la revendication 1.

Selon l'invention, lorsque le dispositif récepteur reçoit un message voué à être affiché, son affichage doit répondre à certains critères ; dans la négative, le message n'est pas affiché. L'invention permet de limiter le nombre de messages affichés dans l'environnement de messagerie en n'affichant pas un message transmis avec une intention de ne pas l'afficher lorsqu'il est reçu par le dispositif récepteur. Selon l'invention, un affichage est précédé d'une étape de recherche d'un tel message en mémoire ; si le résultat de la recherche inclut le message, ce dernier est transmis au module chargé de l'affichage des messages. Tant que le message à accès conditionnel n'est pas le résultat d'une recherche de message, le message à conditionnel n'est pas transmis au module chargé de l'affichage. L'instant d'affichage du message est donc très pertinent car correspond à un instant où l'information véhiculée par ce message est recherchée.

En d'autres mots, une étape de recherche en mémoire de message dans un ensemble de messages est suivie d'une étape d'affichage du message à affichage conditionnel reçu si le résultat de la recherche inclut ce message.

Précisons ici que l'affichage d'un message vise l'affichage du message ou d'une partie du message incluant par exemple l'expéditeur du message, la date et l'objet du message.

Précisons aussi que le module chargé de l'affichage est un module ayant pour fonction d'afficher un message choisi dans une liste de messages autorisés à être affichés.

Selon un premier mode de mise en oeuvre particulier de l'invention, à un message est associé au moins un mot clé. Dans cette configuration, l'étape de recherche se base sur ledit au moins un mot clé. En effet, lorsque la recherche se base sur la donnée représentative d'un message à affichage conditionnel le nombre de résultats peut être important. Cette caractéristique permet de réduire le nombre de résultats en utilisant des mots clés tels que « vacances », « travail », etc.

Selon encore un deuxième mode de mise en oeuvre particulier de l'invention, qui pourra être mis en oeuvre alternativement ou cumulativement avec les précédents, une recherche de message est activée suite à l'obtention d'une donnée externe. De cette manière, l'affichage est automatisé. Une donnée externe entraîne une recherche et un affichage si le résultat de la recherche est fructueux.

Selon encore un troisième mode de mise en oeuvre particulier de l'invention, qui pourra être mis en oeuvre alternativement ou cumulativement avec les précédents modes, la donnée externe est une localisation du dispositif récepteur. Dans ce mode, la localisation permet par exemple d'afficher des messages comprenant des informations sur un lieu donné.

Selon encore un quatrième mode de mise en oeuvre particulier de l'invention, qui pourra être mis en oeuvre alternativement ou cumulativement avec les précédents modes, un message à affichage conditionnel est stocké en mémoire qu'après une étape de validation. Cette caractéristique permet à l'utilisateur récepteur du message de refuser automatiquement des messages à affichage conditionnel n'occupent trop de mémoire.

Selon encore un cinquième mode de mise en oeuvre particulier de l'invention, qui pourra être mis en oeuvre alternativement ou cumulativement avec les précédents modes, suite à l'étape de stockage, un mot clé peut être modifié. Cela permet à l'utilisateur récepteur du message d'associer au message des mots clés plus pertinents de manière à retrouver ce message lors d'une recherche ultérieure.

A noter qu'un mot clé peut être modifié en utilisant des opérateurs logiques (et/ou/etc.) selon la précision souhaitée du résultat de la recherche.

Selon un aspect matériel, l'invention se rapporte à une entité de gestion de la réception d'un message destiné à être restitué issu d'un dispositif émetteur au travers d'un réseau de communication Tel que défini dans la revendication 7.

Selon un autre aspect matériel, l'invention se rapporte à un dispositif de traitement de données comprenant une entité telle que définie ci-dessus.

Selon un autre aspect matériel, l'invention se rapporte à un programme d'ordinateur apte à être mis en oeuvre sur un terminal mobile, le programme comprenant des instructions de code qui, lorsqu'il est exécuté par un processeur, réalise les étapes du procédé définies dans le procédé défini ci-dessus.

Selon un autre aspect matériel, l'invention se rapporte à un support de données sur lequel a été mémorisée au moins une série d'instructions de code de programme pour l'exécution d'un procédé tel que défini ci-dessus.

Selon un autre aspect fonctionnel, l'invention se rapporte à un procédé de gestion de l'envoi d'un message depuis un dispositif émetteur à destination d'un dispositif récepteur au travers d'un réseau de communication, ledit message étant destiné à être restitué, caractérisé en ce qu'il comprend les étapes suivantes :
une étape de composition d'un message incluant une donnée, dite première donnée, représentative d'un message à affichage conditionnel,
une étape de transmission du message à destination d'un dispositif récepteur.

Selon un mode de mise en oeuvre particulier de l'invention, au message est associé au moins un mot clé.

Selon un aspect matériel, l'invention se rapporte à une entité de gestion de l'envoi d'un message depuis un dispositif émetteur à destination d'un dispositif récepteur au travers d'un réseau de communication, ledit message étant destiné à être restitué, caractérisé en ce qu'il comprend :
un module de composition d'un message, le message incluant une donnée, dite première donnée, représentative d'un message à affichage conditionnel,
un module de transmission du message à destination d'un dispositif récepteur.

Selon un autre aspect matériel, l'invention se rapporte à un dispositif de traitement de données comprenant une entité telle que définie ci-dessus.

Selon un autre aspect matériel, l'invention a trait à un programme d'ordinateur apte à être mis en oeuvre sur une entité de gestion telle que définie ci-dessus, le programme comprenant des instructions de code qui, lorsqu'il est exécuté par un processeur, réalise les étapes du procédé définies ci-dessus.

Enfin, l'invention a trait à un support de données sur lequel a été mémorisée au moins une série d'instructions de code de programme pour l'exécution du procédé défini ci-dessus.

Le support de données peut être n'importe quelle entité ou dispositif capable de stocker le programme. Par exemple, le support peut comporter un moyen de stockage, tel qu'une mémoire RAM, une mémoire ROM, par exemple un CD ROM ou une ROM de circuit microélectronique, ou encore un moyen d'enregistrement magnétique tel qu'un un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Enfin, signalons ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] la figure 2 est une vue schématique de l'architecture d'un dispositif émetteur selon un mode de réalisation de l'invention.
[Fig. 3] la figure 3 est une vue schématique de l'architecture d'un dispositif récepteur selon un mode de réalisation de l'invention.
[Fig. 4] la figure 4 illustre un exemple d'étapes mises en oeuvre par le dispositif émetteur dans le cadre d'un procédé selon un mode de réalisation.
[Fig. 5] la figure 5 illustre un exemple d'étapes mises en oeuvre par le dispositif récepteur dans le cadre d'un procédé selon un mode de réalisation.
[Fig. 6] la figure 6 illustre schématiquement un message transmis depuis un dispositif émetteur vers un dispositif récepteur.

### Description détaillée d'un (ou d') exemple(s) de réalisation illustrant l'invention

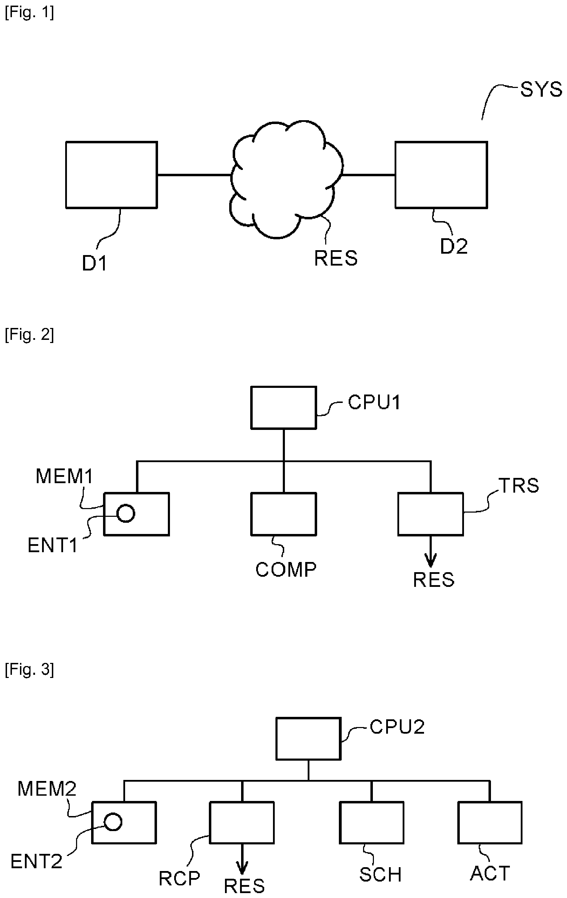

La figure 1 est une vue schématique d'un système informatique SYS dans lequel l'invention peut être mise en oeuvre.

Le système SYS comprend un dispositif émetteur D1 et un dispositif récepteur D2 communiquant au travers d'un réseau de communication RES.

Les dispositifs émetteur et récepteur sont des dispositifs capables de communiquer via un réseau.

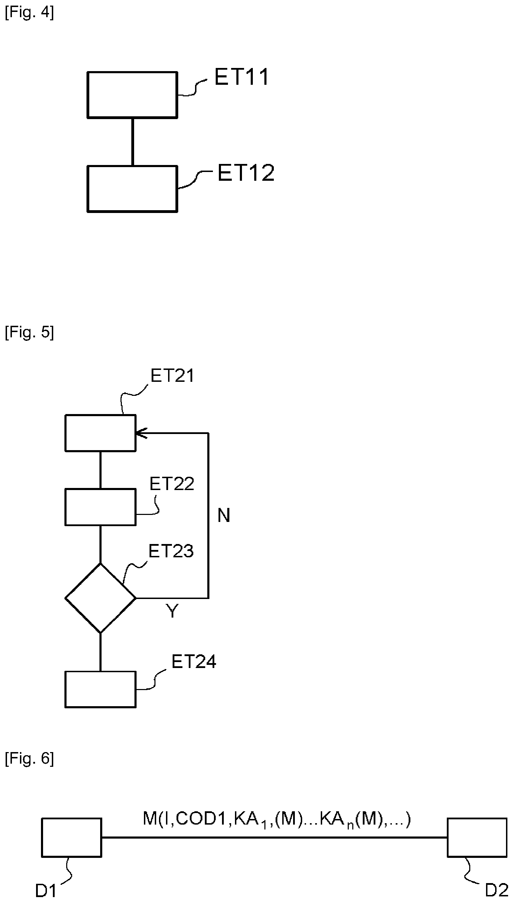

En référence aux figures 2 et 3, les dispositifs ont l'architecture classique d'un ordinateur et comprennent notamment respectivement des processeurs (ou microcontrôleurs) CPU1/CPU2, des mémoires MEM1/MEM2 dans lesquelles des entités ENT1/ENT2 sont stockées. Dans notre exemple les entité ENT1/ENT2 sont des programmes d'ordinateur qui comprennent des instructions pour mettre en oeuvre les étapes du procédé de gestion qui sera décrit par la suite en référence aux figures 4 et 5, lorsque les programmes sont exécutés par les processeurs CPU1/CPU2.

En référence à la figure 2, le dispositif D1 comprend en outre un module de composition de message COMP et un module de transmission de message TRS.

Le module de composition de message COMP inclut une interface de composition de message permettant à un utilisateur de saisir un message. On verra aussi que cette interface permet de spécifier un type de message dit à affichage conditionnel.

On entend par message à affichage conditionnel un message qui, lorsqu'il est reçu par le dispositif récepteur, est affiché sous condition, certains critères devant être remplis.

Le module de transmission de message TRS a pour fonction de transmettre un message sur le réseau RES.

En référence à la figure 3, le dispositif D2 comprend, outre le processeur CPU2 et la mémoire MEM2, un module de réception RCP, un module recherche de message SCH, un module de stockage MEM2, un module d'activation ACT de recherche de message.

La figure 4 illustre les étapes du procédé de traitement réalisé dans le dispositif émetteur D1 conforme à un premier mode de réalisation de l'invention. Les étapes relatives à une première phase sont référencées ET1n (« 1 » désignant la première phase et « n » l'étape visée, « n » est un entier,)

Lors d'une première phase un message est composé et transmis depuis le dispositif D1 vers le dispositif D2.

Lors d'une première étape ET1, l'utilisateur A compose un message M au moyen de l'interface utilisateur (non représentée) du module de composition de message COMP.

Comme expliqué ci-dessus, l'interface utilisateur permet à l'utilisateur d'indiquer que ce message est un message à affichage conditionnel. L'indication peut être réalisée de plusieurs manières. L'indication peut être une information (code binaire, etc.) interprétable par le dispositif récepteur ; ce dernier est capable à réception du code COD1 de détecter que le message reçu est un message à affichage conditionnel et de stocker le message en question en mémoire et de différer l'affichage de ce message sous condition.

En complément, l'utilisateur peut aussi définir une liste de mots clés qu'il va associer au message M. Dans notre exemple, les mots clés associés au message M sont KA1(M)...KAn(M). Dans notre exemple, les mots clés sont inclus dans le message M mais peuvent être aussi en variante accolés au message. De plus le message M et les mots clés associés peuvent être transmis au même instant ou à des instants différents.

Au lieu d'être choisis par l'utilisateur, les mots clés peuvent aussi être suggérés et/ou choisis à partir d'une liste proposée à la sélection.

En définitive, en référence à la figure 6, dans notre exemple, à ce stade, le message M comprend un code COD1, et des mots clés et une information I telle qu'un texte.

Considérons que les deux mots clés KA1(M) et KA2(M) sont respectivement « vacances » et « corse »
Le message peut indifféremment être destiné à un utilisateur ou à une liste de destinataires

Lors d'une deuxième étape ET12, à l'aide du module transmission de message TRS, une fois le message composé, le message M est transmis à destination du dispositif récepteur D2.

La figure 5 illustre les étapes du procédé de traitement réalisé dans le dispositif récepteur D2 conforme à un premier mode de réalisation de l'invention. Les étapes sont référencées ET2n (« 2 » désignant la première phase et « n » l'étape visée, « n » est un entier,)

Lors d'une première étape ET21, le message est reçu par le module de réception de message RCP des destinataires sélectionnés par l'utilisateur A.

On suppose ici que le message est transmis à un seul destinataire B associé au dispositif D2.

Selon un mode de réalisation, le composant de réception de message du dispositif destinataire B peut refuser les messages « à affichage conditionnel ». Dans ce cas, le message est rejeté par le dispositif destinataire. Ce refus systématique permet à l'utilisateur de maîtriser son espace mémoire dans la mémoire MEM2 qui pourrait être encombrée par des messages à affichage conditionnel.

On suppose ici quel le composant de réception de message accepte les messages« à affichage conditionnel ». Une validation de la réception de tels messages a par exemple été réalisée au préalable.

Lors d'une deuxième étape ET22, l'entité ENT2 gère les messages entrants de l'utilisateur B selon deux modèles.
- Si un message ne comprend pas de code COD1, et qu'il n'a donc pas trait à un message à affichage conditionnel, le message en question peut être affiché. Dans notre exemple, le message est donc transmis au composant d'affichage du message AFF et affiché sans traitement particulier.
- Si un message reçu inclut un code COD1 et qu'il a donc les propriétés d'un message du type à affichage conditionnel, le message en question est automatiquement stocké dans le composant de stockage de message sans être affiché sur l'écran. A noter que le composant de stockage peut être local et/ou distant.

Selon l'invention, un affichage d'un message à affichage conditionnel est réalisé sous condition à savoir lorsque le message considéré fait partie du résultat d'une recherche de message parmi un ensemble de messages reçus.

Une recherche peut prendre plusieurs formes.

Selon une première forme, une recherche peut consister à rechercher tous les messages incluant un code COD1 et à les afficher.

Selon une deuxième forme, une recherche de message peut être réalisée dans l'ensemble des messages reçus par le dispositif D2 ou sur un sous-ensemble incluant les messages comportant le code COD1.

Pour réduire le nombre de messages à afficher, une recherche de message peut en outre être basée sur les mots clés associés au message lors de sa composition.

Par exemple, supposons que l'utilisateur B saisi des mots clé KB1..KBm pour rechercher un message (ou plusieurs) comportant un des mots clés.

Dans notre exemple, lors d'une troisième étape ET23, l'utilisateur saisi les mots KB1 et KB2, « vacances » et « corse », respectivement dans l'outil de recherche.

Le module de recherche SCH récupère alors le ou les messages correspondants aux mots clé saisis parmi tous les messages reçus contenus dans la mémoire MEM2, y compris, dans notre exemple, les messages signalés envoyés par d'autres utilisateurs que l'utilisateur A.

Si des mots clés correspondent, en d'autres mots si un des mots clés KB1... KBm correspond à un des mots clés KA1. KAn, selon les paramètres de recherche configurables et selon l'algorithme choisi pour trouver des correspondances, le message M sera inséré dans le résultat de la recherche faite par le module de recherche de message.

Dans notre exemple, les mots clés « vacances » et « corse » correspondent.

Dans notre exemple, l'outil de recherche renvoie comme réponse le message M.

Lors d'une quatrième étape ET24, une fois le résultat obtenu, la liste des messages résultant est transférée au module d'affichage du message qui se charge d'afficher les messages.

Dans notre exemple, le message M est transféré au module d'affichage AFF pour être affiché sur l'écran. Le message M en question qui n'avait probablement pas d'intérêt lors de sa réception revêt de l'importance à cet instant. L'affichage est donc pertinent.

Dans un autre mode de réalisation, les messages à affichage conditionnel ont une durée de vie limitée pour libérer de l'espace mémoire dans le deuxième dispositif D2. En effet, on part du principe dans ce mode qu'un message non lu pendant une période donnée ne sera jamais lu.

Les modes de réalisation décrits ci-dessus peuvent faire l'objet de variantes.

Selon une variante, suite à l'affichage du message M à la suite de la recherche de message, l'utilisateur B peut modifier le code COD1 pour que le message ne soit plus associé à un message à affichage conditionnel mais associé à un autre type de message par exemple un message classique. Le message résultant est alors affiché parmi les messages de l'outil de messagerie utilisé.

Selon une autre variante, le destinataire du message B peut modifier les mots clés définis dans le message reçu.

Selon une autre variante, un message classique peut être transformé en un message à affichage conditionnel. Un code COD1 est créé à cet effet et associé au message. Le destinataire peut aussi associer à ce message des mots clés comme décrit précédemment. De cette manière, le message reçu n'est plus affiché et est stocké en mémoire MEM2. L'accès à ce message s'effectue ensuite selon le procédé décrit ci-dessus à savoir suite à une recherche de message.

Un message peut aussi avoir d'autres propriétés. Par exemple, un message à affichage conditionnel peut inclure un code COD2 signifiant que le message doit être effacé après lecture du message sur le dispositif D2.

Selon une autre variante, l'émetteur du message A a également la possibilité d'ajouter / supprimer des mots clés à un message déjà transmis et stocké dans le dispositif D2. Dans ce cas, la modification peut être transférée aux destinataires ayant reçus le message M.

Selon une autre variante, le dispositif récepteur D2 comprend un module d'activation apte à activer le module de recherche. Le module d'activation est apte à activer le module de recherche de message à partir d'une entrée externe. L'entrée externe peut prendre plusieurs formes décrites ci-dessous :
Selon une première forme, une entrée externe peut être l'analyse d'un QR (ou tag RFID), le QR code contenant une liste de mots clés qui seront communiqués au module de recherche de message par le module d'activation de recherche.

Selon une deuxième forme, l'activation de la recherche de message peut être active et communiquer avec une plate-forme externe pour convertir un ID par exemple extrait du QR code en une liste de mots clés à fournir au module de recherche.

Selon une troisième forme, une liste d'ID / mots clés peuvent être stockés localement dans le système SYS par exemple dans le dispositif émetteur D1 et/ou le dispositif récepteur D2..

En outre, selon une quatrième forme, la localisation du dispositif récepteur D2 peut également être une donnée externe. Par exemple, si le destinataire B est en vacances en corse, le module d'activation active le module de recherche SCRH avec des mots clés en liaison avec la localisation.

Selon une autre variante, l'utilisateur A peut définir un ensemble de messages M1... Mk messages avec leurs mots clés associés. Lorsque A ajoute un nouveau contact C, A peut choisir de partager avec C les messages et leurs mots clés associés. Le système de gestion des messages 9 s'occupera du partage des messages avec le contact C avec la méthode décrite ci-dessous.

En l'espèce, l'utilisateur A du système peut conserver dans D1 l'ensemble des messages à affichage conditionnel qu'il a émis dans le passé. Lorsqu'il crée un nouveau contact C, l'utilisateur A peut choisir d'émettre vers l'utilisateur C les messages à affichage conditionnel émis par le passé. Dans une implémentation, cela peut se faire en positionnant un attribut sur le contact C. Dans une autre application, cela peut se faire en positionnant le contact C dans un groupe de contacts de A destinataires des messages à affichage conditionnel.

Les cas d'usage mettant en oeuvre l'invention sont multiples.

Un premier cas d'usage peut concerner une transmission d'un message de recommandation. Dans cet exemple, l'utilisateur A transmet un message recommandant un restaurant à Paris avec son adresse et un commentaire. Le message pourrait prendre la forme suivante :
M . Bon #_restaurant dans #_Paris la brasserie Flottes brasserieflottes.fr, bon steak tartare et service professionnel

Plus tard, lorsque l'utilisateur B recherche un restaurant à Paris, M est affiché.

Un autre cas d'usage peut être la transmission d'un message secret amélioré. L'utilisateur A transmet un message M et pour une sécurité supplémentaire veut que ce message ne soit pas accessible à moins qu'un mot clé soit recherché. Dans ce cas d'usage, l'utilisateur A communique séparément le mot clé en question à l'utilisateur B par exemple via un autre canal de communication que le réseau RES.

Le message M en question est par exemple :
« J'ai ces informations confidentielles #_J6514SQ7 _GHQSF165 $ // COD1 = (J6514SQ7) // COD2 = (GHQSF165) »
B peut afficher M si et seulement si B entre "J6514SQ7" dans la recherche.

En cas d'urgence, A peut détruire à distance le message M sur l'appareil B envoyant un message de suppression dédié.

Un autre cas d'usage peut concerner un procès-verbal de réunion. Dans ce cas, le message M transmis peut prendre la forme suivante
« j'ai rencontré l' #_entreprisse AAA, #_contact Mr John Doe, et nous avons discuté de l'évolution de la 5G ». Plus tard, l'utilisateur B, par exemple un collègue de A, avant de rencontrer l'entreprise AAA, peut réaliser une recherche de message avec comme mot clé AAA. Le message est affiché et l'utilisateur B peut le lire afin de bien préparer une réunion prévue avec l'entreprise AAA.

Un autre cas d'usage peut concerner la transmission d'un code d'accès à un immeuble par l'utilisateur A.

Le message M peut prendre la forme suivante
M : « #_code 123456 »Plus tard, l'utilisateur B peut rechercher facilement, au moment opportun, le code d'accès de l'utilisateur A parmi les messages identifiés COD1.

## Revendications

1. Procédé, exécutée par une entité de gestion (ENT2), pour gérer la réception d'un message (M) issu d'un dispositif émetteur (D1) au travers d'un réseau de communication (RES), ledit message (M) étant destiné à être restitué et étant apte à être recherché parmi une pluralité de messages reçus à la base de mots clés, **caractérisé en ce qu'**il comprend une étape de réception (ET21) d'un message comprenant une donnée représentative d'un message à affichage conditionnel, et **en ce que**, sur détection de la donnée, le procédé comprend une étape de mémorisation du message et de restitution du message sous condition ; le message étant restitué que s'il est le résultat d'une recherche ultérieure.

2. Procédé de gestion selon la revendication 1, **caractérisé en ce qu'**à un message est associé au moins un mot clé, **en ce que** l'étape de recherche se base sur ledit au moins un mot clé.

3. Procédé de gestion selon la revendication 1, **caractérisé en ce qu'**une recherche de message est activée suite à l'obtention d'une donnée externe.

4. Procédé de gestion selon la revendication 3, **caractérisé en ce que** la donnée externe est une localisation du dispositif récepteur (D2).

5. Procédé de gestion selon la revendication 1, **caractérisé en ce qu'**un message à affichage conditionnel est stocké en mémoire qu'après validation.

6. Procédé selon la revendication 2, **caractérisé en ce que en ce qu'**une recherche est précédée d'une étape de stockage (ET22), et **en ce que** suite à l'étape de stockage, un mot clé peut être modifié.

7. Entité de gestion (ENT2) de la réception d'un message destiné à être restitué issu d'un dispositif émetteur (D1) au travers d'un réseau de communication (RES), ledit message (M) étant destiné à être restitué et étant apte à être recherché parmi une pluralité de messages reçus à la base de mots clés, **caractérisé en ce qu'**il comprend un module de réception d'un message comprenant une donnée représentative d'un message à affichage conditionnel ;
un module d'affichage apte à, sur détection de la donnée, à mémoriser le message et à restituer le message sous condition, le message étant restitué que si ce message est le résultat d'une recherche.

8. Dispositif de traitement de données (D2) comprenant une entité de gestion (ENT2) telle que définie dans la revendication 7.

9. Programme d'ordinateur apte à être mis en oeuvre sur un terminal mobile, le programme comprenant des instructions de code qui, lorsqu'il est exécuté par un processeur, réalise les étapes du procédé définies dans l'une des revendications 1 à 6.

## Patentansprüche

1. Verfahren, das von einer Verwaltungseinheit (ENT2) ausgeführt wird, um das Empfangen einer aus einer sendenden Vorrichtung (D1) hervorgegangenen Nachricht (M) über ein Kommunikationsnetz (RES) zu verwalten, wobei die Nachricht (M) dazu bestimmt ist, ausgegeben zu werden, und geeignet ist, unter einer Vielzahl von empfangenen Nachrichten auf der Basis von Schlagwörtern gesucht zu werden, **dadurch gekennzeichnet, dass** es einen Schritt des Empfangens (ET21) einer Nachricht umfasst, die ein Datenelement umfasst, das für eine Nachricht mit bedingter Anzeige repräsentativ ist, und dadurch, dass das Verfahren, bei Detektion des Datenelements, einen Schritt des Abspeicherns der Nachricht und des Ausgebens der Nachricht unter einer Bedingung umfasst; wobei die Nachricht nur ausgegeben wird, wenn sie das Ergebnis einer späteren Suche ist.

2. Verfahren zur Verwaltung nach Anspruch 1, **dadurch gekennzeichnet, dass** einer Nachricht mindestens ein Schlagwort zugeordnet ist, dass der Schritt des Suchens auf dem mindestens einen Schlagwort basiert.

3. Verfahren zur Verwaltung nach Anspruch 1, **dadurch gekennzeichnet, dass** eine Nachrichtensuche nach dem Erhalten eines externen Datenelements aktiviert wird.

4. Verfahren zur Verwaltung nach Anspruch 3, **dadurch gekennzeichnet, dass** das externe Datenelement eine Position der empfangenden Vorrichtung (D2) ist.

5. Verfahren zur Verwaltung nach Anspruch 1, **dadurch gekennzeichnet, dass** eine Nachricht mit bedingter Anzeige erst nach Validierung im Speicher gespeichert wird.

6. Verfahren nach Anspruch 2, **dadurch gekennzeichnet, dass** einer Suche ein Schritt des Speicherns (ET22) vorausgeht und dass nach dem Schritt des Speicherns ein Schlagwort geändert werden kann.

7. Verwaltungseinheit (ENT2) zum Verwalten des Empfangens einer zum Ausgeben bestimmten Nachricht, die aus einer sendenden Vorrichtung (D1) hervorgegangen ist, über ein Kommunikationsnetz (RES), wobei die Nachricht (M) dazu bestimmt ist, ausgegeben zu werden, und geeignet ist, unter einer Vielzahl von empfangenen Nachrichten auf der Basis von Schlagwörtern gesucht zu werden, **dadurch gekennzeichnet, dass** sie umfasst
ein Modul zum Empfangen einer Nachricht, die ein Datenelement umfasst, das für eine Nachricht mit bedingter Anzeige repräsentativ ist;
ein Anzeigemodul, das geeignet ist, bei Detektion des Datenelements die Nachricht abzuspeichern und die Nachricht unter einer Bedingung auszugeben, wobei die Nachricht nur ausgegeben wird, wenn diese Nachricht das Ergebnis einer Suche ist.

8. Datenverarbeitungsvorrichtung (D2), die eine Verwaltungseinheit (ENT2) wie in Anspruch 7 definiert umfasst.

9. Computerprogramm, das geeignet ist, auf einem mobilen Endgerät eingesetzt zu werden, wobei das Programm Codeanweisungen umfasst, die bei seiner Ausführung durch einen Prozessor die in einem der Ansprüche 1 bis 6 definierten Schritte des Verfahrens ausführen.

## Claims

1. Method, carried out by a management entity (ENT2), for managing reception of a message (M) from a transmitting device (D1) via a communication network (RES), said message (M) being intended to be restored and being able to be searched for among a plurality of received messages on the basis of keywords, **characterized in that** it comprises a step of receiving (ET21) a message comprising a datum that is representative of a conditional display message, and **in that**, upon detection of the datum, the method comprises a step of storing the message and conditionally restoring the message; the message being restored only if it is the result of a subsequent search.

2. Management method according to Claim 1, **characterized in that** at least one keyword is associated with a message, **in that** the search step is based on said at least one keyword.

3. Management method according to Claim 1, **characterized in that** a message search is activated following the obtaining of an external datum.

4. Management method according to Claim 3, **characterized in that** the external datum is a location of the receiving device (D2).

5. Management method according to Claim 1, **characterized in that** a conditional display message is stored in memory only after validation.

6. Method according to Claim 2, **characterized in that** a search is preceded by a storage step (ET22), and **in that** following the storage step a keyword can be modified.

7. Management entity (ENT2) for managing reception of a message intended to be restored from a transmitting device (D1) via a communication network (RES), said message (M) being intended to be restored and being able to be searched for among a plurality of received messages on the basis of keywords, **characterized in that** it comprises
a module for receiving a message comprising a datum that is representative of a conditional display message;
a display module that is able, upon detection of the datum, to store the message and to conditionally restore the message, the message being restored only if this message is the result of a search.

8. Data processing device (D2) comprising a management entity (ENT2) as defined in Claim 7.

9. Computer program that is able to be implemented on a mobile terminal, the program comprising code instructions that, when said program is executed by a processor, perform the steps of the method that are defined in one of Claims 1 to 6.
